# EUROPÄISCHE PATENTSCHRIFT

(11) **EP 1 211 116 B1**
(45) Veröffentlichungstag und Bekanntmachung des Hinweises auf die Patenterteilung: **09.02.2005**
(21) Anmeldenummer: 01127947.8
(22) Anmeldetag: 23.11.2001
(51) Int. Cl.: B60J 10/08, B60J 10/00

(54) **Dichtungsprofil**
Sealing profile
Profil d'étanchéité

(30) Priorität: 24.11.2000 DE 10058497
(43) Veröffentlichungstag der Anmeldung: 05.06.2002
(73) Patentinhaber: Metzeler Automotive Profile Systems GmbH, 88131 Lindau/Bodensee (DE)
(72) Erfinder: Palicki, Dirk, 88138 Hergensweiler (DE)
(74) Vertreter: Preissner, Nicolaus, Dipl.-Ing.

(56) Entgegenhaltungen:
- EP-A- 0 719 668
- EP-B- 0 317 988
- WO-A-02/06070
- GB-A- 2 130 278
- US-A- 4 614 347
- US-A- 4 656 784
- US-A- 5 882 766
- PATENT ABSTRACTS OF JAPAN vol. 2000, no. 06, 22. September 2000 (2000-09-22) & JP 2000 071783 A (KINUGAWA RUBBER IND CO LTD), 7. März 2000 (2000-03-07)

## Beschreibung

Die vorliegende Erfindung betrifft eine Dichtungsanordnung für ein Kraftfahrzeug, das eine mit einem Rahmen versehene Tür und ein Dach aufweist.

Bei einer Reihe von Kraftfahrzeugen werden zur Herstellung des Rahmens stranggepreßte Profile aus Leichtmetall, insbesondere aus Aluminium, verwendet. Diese Profile werden gebogen, um die gewünschte Anpassung an die Dachkontur des Kraftfahrzeugs zu erreichen. Aufgrund der Materialeigenschaften der Profile können diese in der Regel nicht vollständig an die Dachkontur angepaßt werden, so daß zwischen dem oberen Rand des Rahmens und dem Dach ein Zwischenraum entsteht. Dieser Zwischenraum muß durch ein Dichtungsprofil abgedeckt werden. Der Zwischenraum tritt insbesondere im Bereich der C-Säule eines Kraftfahr zeugs auf.

Es sind verschiedene Dichtungsprofile bekannt, die den Zwischenraum überdecken. Nachteilig bei diesen Dichtungsprofilen ist die aufwendige Befestigung durch zusätzliche Elemente, beispielsweise Schrauben. Zudem sind die Dichtungsprofile aus einem gummielastischen Material hergestellt und daher biegsam und verformbar. Bei geöffneter Tür stehen die Dichtungsprofile über den Rahmen vor und werden häufig zum Öffnen oder Schließen der Tür benutzt. Es besteht wegen der geringen Steifigkeit der Dichtungsprofile die Gefahr, daß diese unzulässig verformt und dadurch beschädigt werden. Außerdem können sich die Dichtungsprofile vom Rahmen lösen.

Die EP 0 317 988 B1 offenbart eine Tür für ein Kraftfahrzeug und ein Ver fahren zum Zusammenbauen einer solchen Tür. Die Kraftfahrzeugtür weist einen Rahmen auf, an dem eine Dichtung, die eine Fensterscheibe abdichtet, befestigt ist. Die Dichtung ist mit einem Stützelement versehen, das entweder als metallener Carrier in die Dichtung eingebettet oder formschlüssig mit der Dichtung verbunden ist. Im letzteren Fall ist das Stützelement mit Rastmitteln versehen, die zur Fixierung der Dichtung an dem Rahmen mit Vorsprüngen zusammenwirken. Die eigentliche Befestigung der Dichtung an dem Rahmen wird durch eine stoffschlüssige Verbindung bewirkt, die von einem Klebstoff, der in einem Hohlraum zwischen dem aus Kunststoff bestehenden Stützrahmen und dem Rahmen eingeführt wird, hervorgerufen wird.

Weiterhin offenbart die WO 02106070 A1 einen Rahmen für ein Kraftfahrzeug, an dem eine Dichtung, die eine Fensterscheibe abdichtet, befestigt ist. Die Dichtung ist zu diesem Zweck auf ein Zwischenelement gesteckt, das mit Rastschenken versehen ist. Die Rastschenkel weisen Vorsprünge auf, die in korrespondierende Ausnehmungen eines Basisabschnitts des Rahmens eingreifen.

**Aufgabe** der vorliegenden Erfindung ist es, eine Dichtungsanordnung bereitzustellen, die eine rasche und einfache Befestigung eines eine vergleichsweise hohe Steifigkeit aufweisenden Dichtungsprofils an einem Kraftfahrzeugbauteil, insbesondere einem Türrahmen, ermöglicht.

Diese Aufgabe wird durch eine Dichtungsanordnung gemäß Anspruch 1 gelöst. Vorteilhafte Ausgestaltungen der erfindungsgemäßen Dichtungsanordnung werden in den Ansprüchen 2 bis 8 definiert.

Der Einleger mit dem mindestens einen Rastfuß bewirkt eine zuverlässige, sichere Befestigung des Dichtungsprofils an dem Kraftfahrzeugbauteil ohne Verwendung zusätzlicher Befestigungsmittel. Das Stützblech ist als Teil des Einlegers ausgebildet und führt zu einer Erhöhung des Steifigkeit des Dichtungsprofils. An dem Dichtungsprofil beabstandet zu dem Kraftfahrzeugbauteil angreifende Kräfte werden über den Einleger direkt in das Kraftfahrzeugbauteil eingeleitet. Die Verformung des Dichtungsprofils wird wesentlich verringert.

Das zu dem Rastfuß über einen Zwischenraum beabstandete Stützteil verhindert ein Herausgleiten des Rastfußes aus der Hinterschneidung. Aufgrund des Zwischenraums wird die elastische Verformung des Rastfußes nicht behindert. Es kann für jeden Rastfuß ein eigenes Stützteil vorgesehen werden. Alternativ ist die Verwendung eines durchgehenden Stützteils möglich. Das Stützteil kann zusätzlich ebenfalls als Rastfuß ausgebildet werden und in montiertem Zustand einen Vorsprung des Kraftfahrzeugbauteils hintergreifen.

Der Rastfuß und das Stützteil ragen aus dem Dichtungsprofil heraus. Eine Beschädigung des Dichtungsprofils bei der Montage wird vermieden. Gleichzeitig wird ein unmittelbarer Kontakt zwischen dem Einleger und dem Kraftfahrzeugbauteil bereitgestellt, so daß an dem Dichtungsprofil angreifende Kräfte direkt in das Kraftfahrzeugbauteil eingeleitet werden.

Das Stützblech ist im wesentlichen parallel zu einem von dem Dichtungsprofil abzudichtenden Schließteil angeordnet. Das Stützblech liegt somit im wesentlichen in der Ebene des Schließteils und der Tür, so daß die gewünschte Position des Dichtungsprofils zuverlässig eingehalten wird.

Vorteilhafterweise ist der Rastfuß im Querschnitt im wesentlichen dreiekkig ausgebildet und weist eine Schrägfläche auf, die sich bei der Montage an einem zugeordneten Vorsprung des Kraftfahrzeugbauteils anlegt und den Rastfuß elastisch verformt. Nach dem Hintergreifen des Vorsprungs federt der Rastfuß wieder aus und sichert das Dichtungsprofil.

Bevorzugt kann das Dichtungsprofil einen Ansatz zum Hintergreifen einer Rippe des Kraftfahrzeugbauteils aufweisen. Dieser Ansatz sichert das dem Schließteil zugewandte Ende des Dichtungsprofils gegen Abheben, so daß die Fixierung nochmals verbessert wird.

In einer vorteilhaften Weiterbildung sind mehrere zueinander beabstandete Rastfüße vorgesehen. Die einzelnen Rastfüße können mit geringem Kraftaufwand verformt werden, so daß das Dichtungsprofil mit geringem Kraftaufwand montiert werden kann. Vorteilhafterweise liegen die Rastfüße auf einer Kurve, die der Biegung des Kraftfahrzeugbauteils entspricht.

Der Einleger wird vorteilhafterweise im Bereich der C-Säule eines Kraftfahrzeugs angeordnet. In diesem Bereich steht das Dichtungsprofil vergleichsweise weit über das Kraftfahrzeugbauteil vor. Das Kraftfahrzeugbauteil ist mit einer Anzahl von Vorsprüngen und Aussparungen versehen, wobei die Vorsprünge Hinterschneidungen zur Befestigung der Rastfüße bilden. Zwischen den Rastfüßen sind Aussparungen zur Aufnahme des Einlegers vorgesehen, so daß eine geringe Bauhöhe und damit eine glatte Außenkontur erreicht wird. Das Kraftfahrzeugbauteil ist mit einem Vorsprung zum Bereitstellen einer Anlagefläche für das Stützteil versehen. Diese Anlagefläche bewirkt eine Abstützung des Einlegers, so daß die Fixierung des Dichtungsprofils und die Krafteinleitung in das Kraftfahrzeugbauteil weiter verbessert werden. Die Anlagefläche kann hierbei eben ausgebildet sein oder eine Hinterschneidung zur Fixierung eines als Rastfuß ausgebildeten Stützteils bilden.

Nachstehend wird die Erfindung an Hand eines Ausführungsbeispiels näher beschrieben, das in schematischer Weise in der Zeichnung dargestellt ist. Dabei zeigt:
- Figur 1: eine schematische Ansicht eines Kraftfahrzeugs;
- Figur 2: eine vergrößerte Darstellung der Einzelheit X aus Figur 1;
- Figur 3: einen Schnitt längs der Linie III-III in Figur 2;
- Figur 4: einen Schnitt längs der Linie IV-IV in Figur 2;
- Figur 5: einen Schnitt längs der Linie V-V in Figur 2 nach der Montage des Dichtungsprofils;
- Figur 6: eine Draufsicht auf einen Einleger und
- Figur 7: einen Schnitt längs der Linie VII-VII in Figur 6.

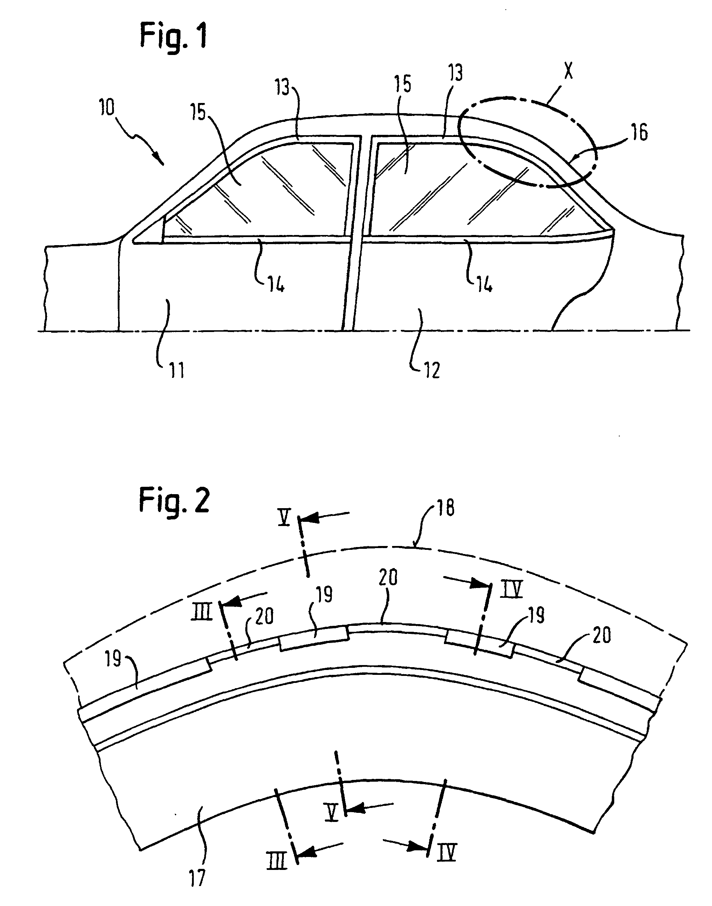

Figur 1 zeigt eine schematische Seitenansicht eines Kraftfahrzeugs 10 mit einer Vordertür 11 und einer Hintertür 12. Beide Türen 11, 12 sind mit einem Dichtungsprofil 13 im Rahmenbereich und einer Schachtdichtung 14 zum Führen und Dichten einer beweglichen Scheibe 15 versehen.

Figur 2 zeigt eine vergrößerte Darstellung der Einzelheit X aus Figur 1 im Bereich der C-Säule 16 des Kraftfahrzeugs 10. Es ist schematisch ein Ausschnitt eines Rahmens 17 der Tür 12 dargestellt. Die Außenkontur des Dichtungsprofils 13 ist mit der Strichlinie 18 angedeutet. Im dargestellten Bereich der C-Säule 16 steht das Dichtungsprofil 13 deutlich über den Rahmen 17 über. Grund hierfür ist, daß der Rahmen 17 nicht in vollem Umfang an die Dachkontur angepaßt werden kann.

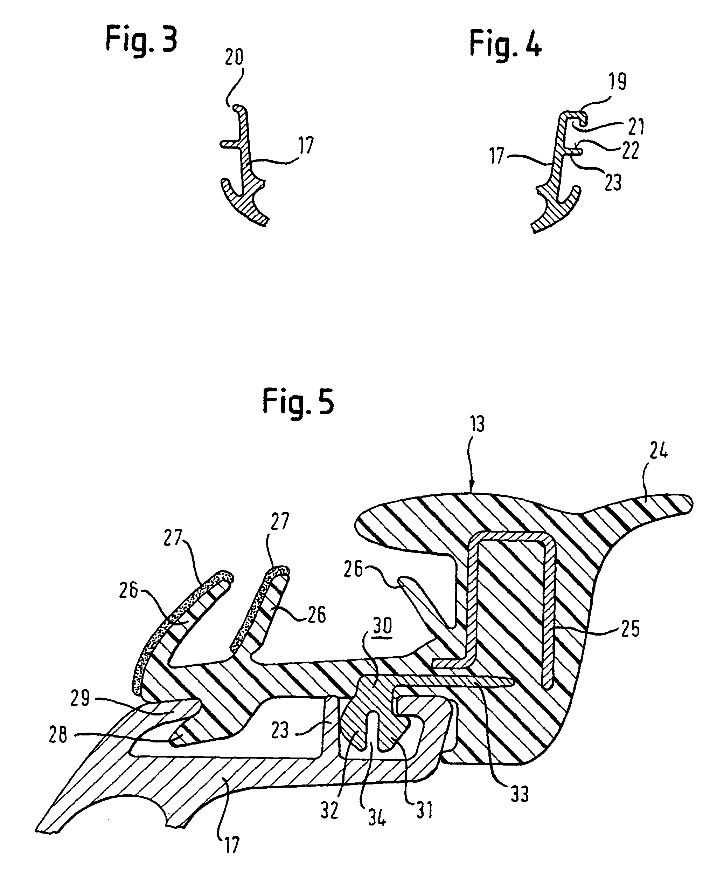

Die Figuren 3 bis 5 zeigen jeweils Schnitte entlang den Linien III-III, IV-IV und V-V in Figur 2, in denen der Aufbau des Rahmens 17 und das Dichtungsprofil 13 näher dargestellt sind.

Das Dichtungsprofil 13 ist zur Führung und Dichtung der Scheibe 15 mit einer Reihe von Lippen 26 versehen, die teilweise mit einer reibungsmindernden Beschichtung 27 versehen sind. Zur Abdichtung gegenüber dem Dach dient eine Lippe 24. Das der Scheibe 15 zugewandte Ende des Dichtungsprofils 13 ist mit einem Ansatz 28 versehen, der einen Vorsprung 29 des Rahmens 17 hintergreift. Durch diese Verbindung wird das Dichtungsprofil 13 zuverlässig fixiert und gegen ein unerwünschtes Abheben gesichert.

Das Dichtungsprofil 13 weist weiter einen Einleger 30 auf, der mit mehreren Rastfüßen 31 zur Befestigung an dem Rahmen 17 versehen ist. Der Rahmen 17 ist mit Vorsprüngen 19 versehen, die Hinterschneidungen 21 für die Rastfüße 31 bilden. Zwischen den Vorsprüngen 19 ist der Rahmen 17 mit Aussparungen 20 versehen, die die gesamte Bauhöhe verringern.

Zur Fixierung des Dichtungsprofils 13 ist der Einleger 30 weiter mit Stützteilen 32 versehen. Diese Stützteile 32 sind über einen Zwischenraum 34 zu den Rastfüßen 31 beabstandet, so daß die Verformung der Rastfüße 31 bei der Montage des Dichtungsprofils 13 nicht behindert wird. Zur Abstützung der Stützteile 32 ist der Rahmen 17 mit einem weiteren Vorsprung 23 versehen, der eine ebene Anlagefläche 22 für die Stützteile 32 bildet.

Die Rastfüße 31 sind im Querschnitt etwa dreieckig ausgebildet und weisen eine schräg verlaufende Anlagefläche für einen Kontakt mit den Vorsprüngen 19 auf. Bei der Montage werden die Rastfüße 31 daher zu den Stützteile 32 hin elastisch verformt und Rasten nach dem Passieren der Vorsprünge 19 in die Hinterschneidungen 21 ein. Die Stützteile 32 gleiten an der Anlagefläche 22 entlang und verhindern, daß die Rastfüße 31 aus den Hinterschneidungen 21 heraustreten. Die Stützteile 32 bewirken bei der Darstellung gemäß Figur 5 eine Sicherung in waagrechter Richtung und die Rastfüße 31 eine Sicherung in senkrechter Richtung. Sowohl die Rastfüße 31 als auch die Stützteile 32 ragen aus dem Dichtungsprofil 13 hervor und stehen in direktem Kontakt mit dem Rahmen 17.

Der Einleger 30 weist weiter ein Stützblech 33 auf, das materialeinstückig mit den Rastfüßen 31 und den Stützteilen 32 verbunden ist. Das Stützblech 33 erstreckt sich ausgehend vom Rahmen 17 etwa parallel zum Fenster 15 in dem Dichtungsprofil 13 und versteift dieses. Zusätzlich kann eine weitere Verstärkungseinlage 25 vorgesehen sein, die zur Fixierung des Dichtungsprofils 13 auf einem nicht näher dargestellten Flansch des Rahmens 17 dient. Auf das Dichtungsprofil 13 wirkende Kräfte werden von dem Stützblech 33 aufgenommen und über die Rastfüße 31 und die Stützteile 32 in den Rahmen 13 eingeleitet. Die Verformung des Dichtungsprofils 13 wird wesentlich verringert.

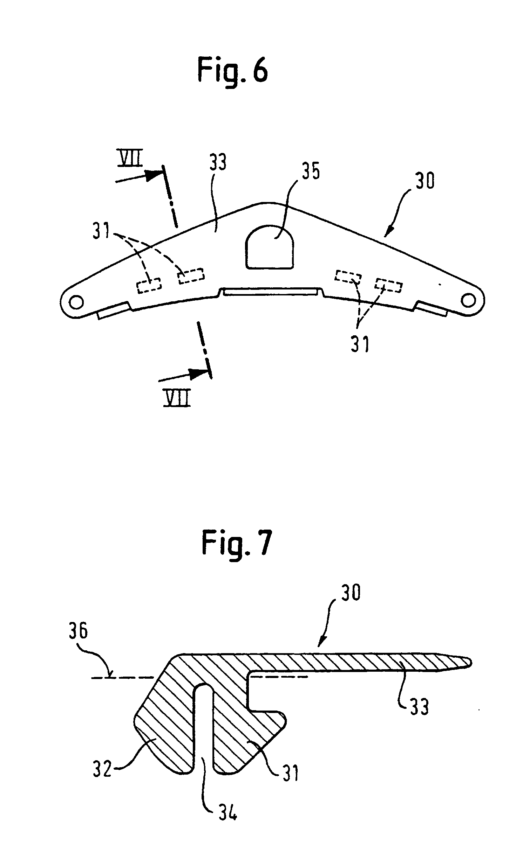

Die Figuren 6 und 7 zeigen den Einleger 30 in der Draufsicht und in einem vergrößert dargestellten Querschnitt. Das Stützblech 33 ist etwa V-förmig ausgebildet und an den Zwischenraum zwischen dem Rahmen 17 und dem Dach angepaßt. Es ist mit einer Ausnehmung 35 zur Verringerung des Gewichts und zur besseren Fixierung in dem Dichtungsprofil 13 versehen. Die Rastfüße 31 sind etwa auf einem Kreisbogen angeordnet, der an die Kontur des Rahmens 17 angepaßt ist. Auch die Stützteile 32 sind entsprechend angeordnet. In Figur 7 ist zur Erläuterung nochmals schematisch die Unterkante des Dichtungsprofils 13 als Strichlinie 36 dargestellt. Die Rastfüße 31 und die Stützteile 32 ragen aus dem Dichtungsprofil 13 hervor.

Das Dichtungsprofil 13 kann wegen des Einlegers 30 mit den Rastfüßen 31 und den Stützteile 32 rasch, einfach und ohne Verwendung zusätzlicher Befestigungsmittel an dem Rahmen 17 befestigt werden. Das Stützblech 33 des Einlegers 30 bewirkt eine Versteifung des Dichtungsprofils 13, so daß unzulässige Verformungen und Beschädigungen zuverlässig vermieden werden.

## Patentansprüche

1. Dichtungsanordnung für ein Kraftfahrzeug (10), das eine mit einem Rahmen (17) versehene Tür (12) und ein Dach aufweist, mit einem an dem Rahmen (17) befestigten Dichtungsprofil (13), das mit wenigstens einer eine Fensterscheibe (15) führenden und abdichtenden Lippe (26) und einer die Tür (12) gegenüber dem Dach abdichtenden Lippe (24) versehen ist, und einem in dem Dichtungsprofil (13) angeordneten Einleger (30), der ein das Dichtungsprofil (13) versteifendes Stützblech (33), wenigstens einen elastisch verformbaren Rastfuß (31) und wenigstens ein von dem Rastfuß (31) über einen Zwischenraum (34) beabstandetes Stützteil (32) aufweist, wobei der Rahmen (17) mit wenigstens einem ersten Vorsprung (19), der eine Hinterschneidung (21), in die der Rastfuß (31) zur Befestigung des Dichtungsprofils (13) eingreift, bildet, und wenigstens einem zweiten Vorsprung (23), der eine sich annährend orthogonal zu dem Stützblech (33) erstreckende Anlagefläche (22) für das Stützteil (32) bildet, versehen ist, wobei sich das Stützblech (33) annährend parallel zu der Fensterscheibe (15) erstreckt und wobei der Rastfuß (31) und das Stützteil (32) zwischen dem ersten Vorsprung (19) und dem zweiten Vorsprung (23) orthogonal zu dem Stützblech (33) aus dem Dichtungsprofil (13) herausragen.

2. Dichtungsanordnung nach Anspruch 1, **dadurch gekennzeichnet, dass** der Rastfuß (31) im Querschnitt im wesentlichen dreieckig ausgebildet ist und eine schräg verlaufende Anlagefläche zum Kontaktieren des ersten Vorsprungs (19) aufweist.

3. Dichtungsanordnung nach Anspruch 1 oder 2, **dadurch gekennzeichnet, dass** das Stützblech (33) annährend V-förmig ist.

4. Dichtungsanordnung nach einem der Ansprüche 1 bis 3, **dadurch gekennzeichnet, dass** das Stützblech (33) mit einer Ausnehmung (35) versehen ist.

5. Dichtungsanordnung nach einem der Ansprüche 1 bis 4, **gekennzeichnet durch** eine Vielzahl voneinander beabstandeter Rastfüße (31), wobei der Rahmen (17) gebogen ist und die Rastfüße (31) auf einer der Biegung des Rahmens (17) entsprechenden Kurve angeordnet sind.

6. Dichtungsanordnung nach Anspruch 5, **gekennzeichnet durch** eine Vielzahl an ersten Vorsprüngen (19) und die ersten Vorsprünge (19) voneinander beabstandender Aussparungen (20).

7. Dichtungsanordnung nach einem der Ansprüche 1 bis 6, **dadurch gekennzeichnet, dass** das Dichtungsprofil (13) mit einem Ansatz (28) versehen ist, der einen dritten Vorsprung (29) des Rahmens (17) hintergreift.

8. Dichtungsanordnung nach einem der Ansprüche 1 bis 7, **dadurch gekennzeichnet, dass** der Einleger (30) im Bereich der C-Säule (16) des Kraftfahrzeugs (10) in dem Dichtungsprofil (13) angeordnet ist.

## Claims

1. A weatherseal assembly for an automotive vehicle (10) comprising a door (12) provided with a frame (17) and a roof, including a sealing profile (13) secured to said frame (17), said sealing profile (13) being provided with at least one lip (26) guiding and sealing a window pane (15) and a lip (24) sealing said door (12) against said roof, and, arranged in said sealing profile (13), an inlay (30) comprising a supporting metal strip (33) stiffening said sealing profile (13), at least one flexible detent (31) and at least one supporting part (32) spaced away from said detent (31) by an interspace (34), said frame (17) being provided with at least one first protrusion (19) forming an undercut (21) engaging said detent (31) for securing said sealing profile (13), and at least one second protrusion (23) forming a contact surface area (22) extending approximately orthogonally to said supporting metal strip (33) for said supporting part (32), said supporting metal strip (33) extending roughly parallel to said window pane (15) and said detent (31) and said supporting part (32) between said first protrusion (19) and second protrusion (23) protruding orthogonally to said supporting metal strip (33) from said sealing profile (13).

2. The weatherseal assembly as set forth in claim 1, **characterized in that** said detent (31) is configured cross-sectionally substantially triangular and comprises a ramped contact surface area for contacting said first protrusion (19).

3. The weatherseal assembly as set forth in claim 1 or 2, **characterized in that** said supporting metal strip (33) is approximately vee-shaped.

4. The weatherseal assembly as set forth in any of the claims 1 to 3, **characterized in that** said supporting metal strip (33) is provided with a recess (35).

5. The weatherseal assembly as set forth in any of the claims 1 to 4, **characterized by** a plurality of detents (31) each separated from the other, said frame (17) being curved and said detents (31) being arranged on a curve corresponding to a bend in said frame (17).

6. The weatherseal assembly as set forth in claim 5, **characterized by** a plurality of first protrusions (19) and a plurality of recesses (20) spacing each first protrusion (19) from the other.

7. The weatherseal assembly as set forth in any of the claims 1 to 6, **characterized in that** said sealing profile (13) is provided with an appendage (28) clasping a third protrusion (29) of said frame (17).

8. The weatherseal assembly as set forth in any of the claims 1 to 7, **characterized in that** said inlay (30) is arranged in the region of the C-pillar (16) of said automotive vehicle (10) in said sealing profile (13).

## Revendications

1. Agencement d'étanchéité pour un véhicule automobile (10) qui comprend une portière (12) pourvue d'un cadre (17), et une toiture, comprenant un profil d'étanchéité (13) fixé sur le cadre (17), le profil étant doté d'au moins une lèvre (26) qui guide et qui étanche une vitre de fenêtre (15) et d'une lèvre (24) qui étanche la porte (12) vis-à-vis de la toiture, et un insert (30) agencé dans le profil étanchéité (13), ledit insert comprenant une tôle de soutien (33) qui rigidifie le profil d'étanchéité (13), au moins un pied d'enclenchement (31) élastiquement déformable, et au moins une partie de soutien (32) écartée du pied d'enclenchement (31) au moyen d'un espace intermédiaire (34), dans lequel le cadre (17) est pourvu d'au moins une première saillie (19), qui forme une contre-dépouille (21) dans laquelle s'engage le pied d'enclenchement (31) pour la fixation du profil d'étanchéité (13), et d'au moins une seconde saillie (23) qui forme une surface d'appui (22), s'étendant approximativement perpendiculairement à la tôle de soutien (33), pour la partie de soutien (32), ladite de tôle de soutien (33) s'étendant approximativement parallèlement à la vitre de fenêtre (15), et dans lequel le pied d'enclenchement (31) et la partie de soutien (32) se projettent hors du profil d'étanchéité (13) entre la première saillie (19) et la seconde saillie (23) perpendiculairement à la tôle de soutien (33).

2. Agencement d'étanchéité selon la revendication 1, **caractérisé en ce que** le pied d'enclenchement (31) est réalisé avec une section transversale essentiellement triangulaire, et comprend une surface d'appui s'étendant en oblique pour venir en contact avec la première saillie (19).

3. Agencement d'étanchéité selon l'une ou l'autre des revendications 1 et 2, **caractérisé en ce que** la tôle de soutien (33) est approximativement en forme de V.

4. Agencement d'étanchéité selon l'une des revendications 1 à 3, **caractérisé en ce que** la tôle de soutien (33) est pourvue d'un évidement (35).

5. Agencement d'étanchéité selon l'une des revendications 1 à 4, **caractérisé par** une pluralité de pieds d'enclenchement (31) écartés les uns des autres, le cadre (17) étant cintré, et les pieds d'enclenchement (31) étant agencés sur une courbe qui correspond au cintrage du cadre (17).

6. Agencement d'étanchéité selon la revendication 5, **caractérisé par** une pluralité de premières saillies (19), et par une pluralité d'évidements (20) qui écartent les premières saillies (19) les unes des autres.

7. Agencement d'étanchéité selon l'une des revendications 1 à 6, **caractérisé en ce que** le profil d'étanchéité (13) est pourvu d'un talon (28) qui engage par l'arrière une troisième saillie (29) du cadre (17).

8. Agencement d'étanchéité selon l'une des revendications 1 à 7, **caractérisé en ce que** l'insert (30) est agencé dans le profil d'étanchéité (13) dans la région du montant C (16) du véhicule automobile (10).
